# EUROPEAN PATENT APPLICATION

(11) **EP 3 739 961 A1**
(43) Date of publication of application: **18.11.2020**
(21) Application number: 18899788.6
(22) Date of filing: 12.01.2018
(51) Int. Cl.: H04W 48/10

(54) **INDICATION METHOD FOR SYSTEM BROADCAST INFORMATION, NETWORK DEVICE, AND TERMINAL DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: TANG, Hai, Dongguan, Guangdong 523860 (CN)
(74) Representative: Ziebig & Hengelhaupt Patent- und Rechtsanwaltskanzlei PartG mbB
(86) International application number: PCT/CN2018/072322
(87) International publication number: WO 2019/136683

(57) **Abstract**

Disclosed are an indication method for system broadcast information, a network device, a terminal device, and a computer storage medium. The method comprises: when a change takes place in system broadcast information, configuring a system broadcast information change indication with respect to the at least one type of system broadcast information in the paging message on the basis of the system broadcast information in which the change takes place.

## Description

### TECHNICAL FIELD

The disclosure relates to the technical field of information processing, and in particular to a method for indicating system broadcast information, a network device, a terminal device, and a computer storage medium.

### BACKGROUND

In new radio (NR), system broadcast information includes minimum system information (MSI) and other system information (OSI). The OSI can be sent by a network side based on a request from a user equipment (UE) rather than being periodically broadcast by the network side traditionally. The UE may request the OSI from the network side through MSG1 or MSG3 in a random access procedure.

In NR, system broadcast information includes, as a whole, master information block (MIB), remaining minimum system information (RMSI) and the OSI. However, a terminal device receives information in system broadcast under any circumstances, which makes system processing inflexible, and may further cause a problem of serious power consumption due to receiving unnecessary information.

### SUMMARY

In order to solve the technical problem, embodiments of the disclosure provide a method for indicating system broadcast information, a network device, a terminal device, and a computer storage medium.

The embodiment of the disclosure provides a method for indicating system broadcast information. The method may be applied to a network device, and may include:

when a change takes place in system broadcast information, setting, in a paging message, a system broadcast information change indication for at least one type of system broadcast information based on the system broadcast information in which the change takes place.

The embodiment of the disclosure provides a method for indicating system broadcast information. The method may be applied to a terminal device and may include:
receiving a paging message from a network side; and
reading a system broadcast information change indication for at least one type of system broadcast information from the paging message.

The embodiment of the disclosure provides a network device. The network device may include:
a first processing unit, configured to, when a change takes place in system broadcast information, set, in a paging message, a system broadcast information change indication for at least one type of system broadcast information based on the system broadcast information in which the change takes place.

The embodiment of the disclosure provides a terminal device. The terminal device may include:
a second communication unit, configured to receive a paging message from a network side; and
a second processing unit, configured to read a system broadcast information change indication for at least one type of system broadcast information from the paging message.

The embodiment of the disclosure provides a network device, which may include: a processor, and a memory storing a computer program executable by the processor,
the processor is configured to execute the computer program to perform the foregoing method.

The embodiment of the disclosure provides a terminal device, which may include: a processor, and a memory storing a computer program executable by the processor,
the processor is configured to execute the computer program to perform the foregoing method.

The embodiment of the disclosure provides a computer storage medium having stored therein computer executable instructions that, when executed by a processor, cause the processor to perform the foregoing method.

According to the technical solution in the embodiments of the disclosure, when a change takes place in system broadcast information, a system broadcast information change indication is sent through a paging message, meanwhile, classification is performed according to contents of the system broadcast information, and whether system broadcast is changed or not is indicated respectively according to different classes. In this way, a terminal device the receives the paging message can selectively re-acquire he system broadcast information according to its own demand for the system broadcast information, so that the purposes of improving system flexibility and saving power of the terminal device can be achieved.

### BRIEF DESCRIPTION OF THEDRAWINGS

FIG. 1 is a first schematic flowchart of a method for indicating system broadcast information according to an embodiment of the disclosure.
FIG. 2 is a second schematic flowchart of a method for indicating system broadcast information according to an embodiment of the disclosure.
FIG. 3 is a schematic structure diagram of a network device according to an embodiment of the disclosure.
FIG. 4 is a schematic structure diagram of a terminal device according to an embodiment of the disclosure.
FIG. 5 is a schematic diagram of a hardware framework according to an embodiment of the disclosure.

### DETAILED DESCRIPTION

In order to understand characteristics and technical contents of embodiments of the disclosure in more detail, implementations of the embodiments of the disclosure are described in detail below with reference to drawings, and the accompanying drawings are only for reference rather than limiting the embodiments of the disclosure.

### First embodiment

The embodiment of the disclosure provides a method for indicating system broadcast information. The method is applied to a network device, and includes the following operations.

When a change takes place in system broadcast information, a system broadcast information change indication for at least one type of system broadcast information is set in a paging message based on the system broadcast information in which the change takes place.

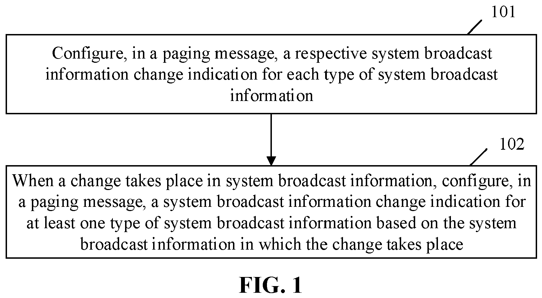

It needs to be further understood that before executing the above processing, the method may further include configuring a respective change indication for each piece of system broadcast information. Specifically, as illustrated in FIG.1, the technical solution provided by the present embodiment includes the following operations.

In 101, a respective system broadcast information change indication for each type of system broadcast information is configured in the paging message.

In 102, when a change takes place in system broadcast information, a system broadcast information change indication for at least one type of system broadcast information is set in the paging message based on the system broadcast information in which the change takes place.

That is, at least two system broadcast information change indications need to be defined in advance, namely a master-system broadcast information change indication and an other-system broadcast information change indication.

Specifically, the system broadcast information change indication includes at least one of: a master-system broadcast information change indication for a Master Information Block (MIB) and Remaining Minimum System Information (RMSI); or, an other-system broadcast information change indication for Other System Information (OSI). The master-system broadcast information change indication for the MIB and the RMSI is used for indicating MIB and RMSI system broadcast changes in a system. The other-system broadcast information change indication for the OSI is used for indicating OSI system broadcast changes in the system.

Further, the system broadcast information change indication may further include: a change indication of system broadcast information corresponding to at least one System Information Block (SIB) group. That is, a plurality of system broadcast information change indications may further be defined according to SIB grouping in the solution provided by the present embodiment.

SIB grouping configuration information is configured through system broadcast. Specifically, the SIB grouping configuration information may include: SIBs included in each SIB group. In addition, the SIB grouping configuration information may further include a respective bit, in the paging message, occupied by a change indication of system broadcast information corresponding to each SIB group.

If a change takes place in system broadcast information of a network side, the network side adds a system broadcast information change indication into the paging message according to specific information blocks which change in system broadcast.

It can be understood that the system broadcast information change indication for the at least one type of system broadcast information may be one bit, and when a value of the bit is equal to 1, it can be determined that the corresponding system broadcast information is true, that is, a change takes place in the system broadcast information. When the value of the bit is equal to 0, it can be determined that the corresponding system broadcast information is false, that is, no change takes place in the system broadcast information.

Accordingly, by means of the above solution, when a change takes place in system broadcast information, the system broadcast information change indication is sent through a paging message, meanwhile, classification is performed according to contents of the system broadcast information, and whether system broadcast is changed or not is indicated respectively according to different classes. In this way, a terminal device that receives the paging message can selectively re-acquire the system broadcast information according to its own demand for the system broadcast information, thereby achieving the purposes of improving system flexibility and saving power of the terminal device.

### Second embodiment

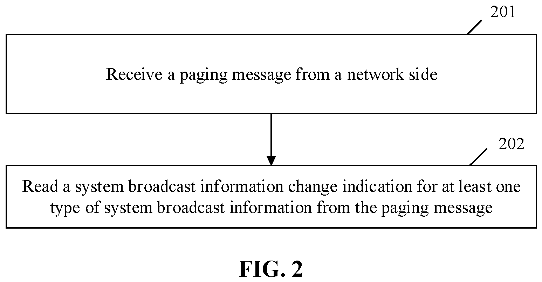

The embodiment of the disclosure provides a method for indicating system broadcast information. The method is applied to a terminal device. As illustrated in FIG. 2, the method includes the following operations.

In 201, a paging message sent by a network side is received.

In 202, a system broadcast information change indication for at least one type of system broadcast information is read from the paging message.

Specifically, the system broadcast information change indication includes at least one of: a master-system broadcast information change indication for an MIB and RMSI; or, an other-system broadcast information change indication for OSI. The master-system broadcast information change indication for the MIB and the RMSI is used for indicating MIB and RMSI system broadcast changes in a system. The other-system broadcast information change indication for the OSI is used for indicating OSI system broadcast changes in the system.

Further, the system broadcast information change indication may further include: a change indication of system broadcast information corresponding to at least one SIB group. That is, a plurality of system broadcast information change indications may further be defined according to SIB grouping in the solution provided by the present embodiment.

The method may further include that: SIB grouping configuration information is obtained through system broadcast. Specifically, the SIB grouping configuration information may include: SIBs included in each SIB group. In addition, the SIB grouping configuration information may further include a respective bit, in the paging message, occupied by a change indication of system broadcast information corresponding to each SIB group.

If a change takes place in system broadcast information of the network side, the network side adds a system broadcast information change indication into the paging message according to specific information blocks which change in system broadcast.

It can be understood that the system broadcast information change indication for the at least one type of system broadcast information may be one bit, and when a value of the bit is equal to 1, it can be determined that the corresponding system broadcast information is true, that is, a change takes place in the system broadcast information. When the value of the bit is equal to 0, it can be determined that the corresponding system broadcast information is false, that is, no change takes place in the system broadcast information.

After the operation of reading the system broadcast information change indication for the at least one type of system broadcast information from the paging message, the method further include the following operation.

When system broadcast information indicated by the system broadcast information change indication is to be updated to the terminal device, the system broadcast information is re-acquired.

Specifically, when the system broadcast information change indication corresponds to the other-system broadcast information change indication for the OSI, whether the OSI needs to be obtained or not is determined, and in response to determining that the OSI does not need to be obtained, the system broadcast information is not re-acquired.

When the system broadcast information change indication corresponds to the master-system broadcast information change indication for the MIB and the RMSI, the system broadcast information is re-acquired.

That is, the terminal device receives own paging message and obtains a change indication about the system broadcast information of the network side, and if the changed system broadcast information is to be updated to User Equipment (UE), the UE is triggered to obtain the system broadcast information again.

For example, with respect to UE that has no storage of the OSI or does not need to obtain the OSI, if it is found that the OSI changes, new system broadcast information is not obtained. If it is indicated that the MIB/RMSI is updated, new system broadcast information needs to be obtained.

Accordingly, by means of the above solution, when the change takes place in system broadcast information, the system broadcast information change indication is sent through a paging message, meanwhile, classification is performed according to contents of the system broadcast information, and whether system broadcast is changed or not is indicated respectively according to different classes. In this way, the terminal device that receives the paging message can selectively re-acquire the system broadcast information again according to its own demand for the system broadcast information, so that the purposes of improving system flexibility and saving power of the terminal device can be achieved.

### Third embodiment

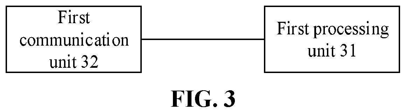

The embodiment of the disclosure provides a network device. As illustrated in FIG. 3, the network device includes a first processing unit 31.

The first processing unit 31 is configured to, when a change takes place in system broadcast information, set, in a paging message, a system broadcast information change indication for the at least one type of system broadcast information based on the system broadcast information in which the change takes place.

It needs to be further understood that before executing the above processing, the first processing unit 31 may be further configured to configure a respective change indication for each piece of system broadcast information. Specifically, as illustrated in FIG. 1, the solution provided by the present embodiment includes the following operations.

The first processing unit 31 configures a respective system broadcast information change indication in the paging message for each type of system broadcast information.

That is, at least two system broadcast information change indications need to be defined in advance, namely a master-system broadcast information change indication and an other-system broadcast information change indication.

Specifically, the system broadcast information change indications include: a master-system broadcast information change indication for an MIB and RMSI; and/or, an other-system broadcast information change indication for OSI. The master-system broadcast information change indication for the MIB and the RMSI is used for indicating MIB and RMSI system broadcast changes in a system. The other-system broadcast information change indication for the OSI is used for indicating OSI system broadcast changes in the system.

Further, the system broadcast information change indications may further include: a change indication of system broadcast information corresponding to at least one SIB group. That is, a plurality of system broadcast information change indications may further be defined according to SIB grouping in the solution provided by the present embodiment.

The network device further includes a first communication unit 32.

The first communication unit 32 configures SIB grouping configuration information through system broadcast.

Specifically, the SIB grouping configuration information may include: SIBs included in each SIB group. In addition, the SIB grouping configuration information may further include a respective bit, in the paging message, occupied by a change indication of system broadcast information corresponding to each SIB group.

If a change takes place in system broadcast information of a network side, the network side adds a system broadcast information change indication into the paging message according to specific information blocks which change in system broadcast.

It can be understood that the system broadcast information change indication with respect to the at least one type of system broadcast information may be a bit, and when a value of the bit is equal to 1, it can be determined that the corresponding system broadcast information is true, that is, a change takes place in the system broadcast information. When the value of the bit is equal to 0, it can be determined that the corresponding system broadcast information is false, that is, no change takes place in the system broadcast information.

Accordingly, by means of the above solution, when a change takes place in system broadcast information, the system broadcast information change indication is sent through a paging message, meanwhile, classification is performed according to contents of the system broadcast information, and whether system broadcast is changed or not is indicated respectively according to different classes. Therefore, a terminal device that receives the paging message can select to obtain the system broadcast information again according to requirements for obtaining the system broadcast information thereof, so that the purposes of improving system flexibility and saving power of the terminal device can be achieved.

### Fourth embodiment

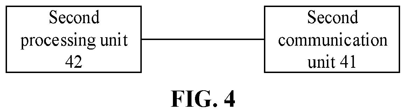

The embodiment of the disclosure provides a terminal device. As illustrated in FIG. 4, the terminal device includes a second communication unit 41 and a second processing unit 42.

The second communication unit 41 receives a paging message from a network side.

The second processing unit 42 reads a system broadcast information change indication for at least one type of system broadcast information from the paging message.

Specifically, the system broadcast information change indication includes: a master-system broadcast information change indication for an MIB and RMSI; and/or, an other-system broadcast information change indication for OSI. The master-system broadcast information change indication for the MIB and the RMSI is used for indicating MIB and RMSI system broadcast changes in a system. The other-system broadcast information change indication for the OSI is used for indicating OSI system broadcast changes in the system.

Further, the system broadcast information change indication may further include: a change indication of system broadcast information corresponding to at least one SIB group. That is, a plurality of system broadcast information change indications may further be defined according to SIB grouping in the solution provided by the present embodiment.

The second processing unit 42 obtains SIB grouping configuration information through system broadcast. Specifically, the SIB grouping configuration information may include: SIBs included in each SIB group. In addition, the SIB grouping configuration information may further include a respective bit, in the paging message, occupied by a change indication of system broadcast information corresponding to each SIB group.

If a change takes place in system broadcast information of the network side, the network side adds a system broadcast information change indication into the paging message according to specific information blocks which change in system broadcast.

It can be understood that the system broadcast information change indication for the at least one type of system broadcast information may be a bit, and when a value of the bit is equal to 1, it can be determined that the corresponding system broadcast information is true, that is, a change takes place in the system broadcast information. When the value of the bit is equal to 0, it can be determined that the corresponding system broadcast information is false, that is, no change takes place in the system broadcast information.

After the system broadcast information change indication with respect to the at least one type of system broadcast information is read from the paging message, a method further includes the following operation.

When system broadcast information indicated by the system broadcast information change indication is to be updated to the terminal device, the second processing unit 42 obtains system broadcast information again.

Specifically, when the system broadcast information change indication corresponds to the other-system broadcast information change indication for the OSI, the second processing unit 42 determine whether the OSI needs to be obtained or not, and if the OSI does not need to be obtained, the system broadcast information is not obtained again.

When the system broadcast information change indication corresponds to the master-system broadcast information change indication for the MIB and the RMSI, the system broadcast information is re-acquired.

That is, the terminal device receives own paging message and obtains a change indication about the system broadcast information of the network side, and if the changed system broadcast information is to be updated to UE, the UE is triggered to re-acquire system broadcast information.

For example, with respect to UE that has no storage of the OSI or does not need to obtain the OSI, if it is found that the OSI changes, new system broadcast information is not obtained. If it is indicated that MIB/RMSI is updated, new system broadcast information needs to be obtained.

Accordingly, by means of the above solution, when a change takes place in system broadcast information, a system broadcast information change indication is sent through the paging message, meanwhile, classification is performed according to contents of the system broadcast information, and whether system broadcast is changed or not is indicated respectively according to different classes. Therefore, the terminal device that receives the paging message can select to obtain the system broadcast information again according to requirements for obtaining the system broadcast information thereof, so that the purposes of improving system flexibility and saving power of the terminal device can be achieved.

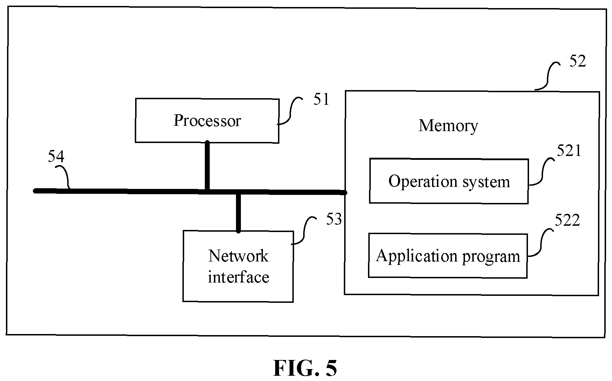

The embodiment of the disclosure further provides a hardware composition framework of a terminal device or a network device. As illustrated in FIG. 5, the hardware composition framework includes: at least one processor 51, a memory 52 and at least one network interface 53. All assemblies are coupled together through a bus system 54. It can be understood that the bus system 54 is configured to realize connections and communications between the assemblies. The bus system 54 includes a data bus, and further includes a power bus, a control bus and a state signal bus. But for clear illustration, all the buses are marked as the bus system 54 in FIG. 5.

It can be understood that the memory 52 in the embodiment of the disclosure can be a volatile memory or a non-volatile memory, or may include both the volatile memory and the non-volatile memory.

In some implementations, elements stored in the memory 52 are as follows: executable modules or data structures, or subsets thereof, or supersets thereof such as an operation system 521 and an application program 522.

The processor 51 is configured to be capable of processing the steps of the method of the foregoing first and second embodiments, which is omitted herein.

The embodiment of the disclosure provides a computer storage medium having stored therein computer executable instructions that, when executed by a processor, cause the processor to perform the method of the foregoing first and second embodiments.

If the above devices of the embodiments of the disclosure are realized in the form of software functional modules and are sold or used as independent products, the devices may further be stored in a computer readable storage medium. Based on the understandings, the technical solutions of the embodiments of the disclosure may be embodied in the form of a software product essentially or on the part of contributions to the prior art. The computer software product is stored in a storage medium and includes a plurality of instructions configured to enable a computer device (a personal computer, or a server, or a network device, etc.) to execute all or part of the method of all the embodiments. The above-mentioned storage medium includes a USB flash disk, a mobile hard disk, a Read Only Memory (ROM), a disk, or an optical disk or various media capable of storing program codes. Therefore, the embodiments of the disclosure are not limited to any specific hardware and software combination.

Correspondingly, the embodiment of the disclosure further provides a computer storage medium storing computer programs therein. The computer programs are configured to execute a data scheduling method of the embodiments of the disclosure.

Although preferred embodiments of the disclosure have been disclosed for the purpose of illustration, those skilled in the art will be aware that various modifications, increase and replacements are possible, so the scope of the disclosure should not be limited by the above embodiments.

## Claims

1. A method for indicating system broadcast information, applied to a network device, the method comprising:
when a change takes place in system broadcast information, setting, in a paging message, a system broadcast information change indication for at least one type of system broadcast information based on the system broadcast information in which the change takes place.

2. The method of claim 1, wherein the system broadcast information change indication comprises at least one of:
a master-system broadcast information change indication for a Master Information Block (MIB) and Remaining Minimum System Information (RMSI); or,
an other-system broadcast information change indication for Other System Information (OSI).

3. The method of claim 1, wherein the system broadcast information change indication comprises:
a change indication of system broadcast information corresponding to at least one System Information Block (SIB) group.

4. The method of claim 3, further comprising:
configuring SIB grouping configuration information through system broadcast.

5. The method of claim 3, further comprising:
configuring, in the paging message, a respective system broadcast information change indication for each type of system broadcast information.

6. A method for indicating system broadcast information, applied to a terminal device, the method comprising:
receiving a paging message from a network side; and
reading a system broadcast information change indication for at least one type of system broadcast information from the paging message.

7. The method of claim 6, further comprising:
after reading the system broadcast information change indication for the at least one type of system broadcast information from the paging message,
re-acquiring the system broadcast information when system broadcast information indicated by the system broadcast information change indication is to be updated to the terminal device.

8. The method of claim 7, wherein the system broadcast information change indication comprises at least one of:
a master-system broadcast information change indication for a Master Information Block (MIB) and Remaining Minimum System Information (RMSI); or,
an other-system broadcast information change indication for Other System Information (OSI).

9. The method of claim 7, wherein the system broadcast information change indication comprises:
a change indication of system broadcast information corresponding to at least one System Information Block (SIB) group.

10. The method of claim 9, further comprising:
obtaining SIB grouping configuration information through system broadcast.

11. The method of claim 6, further comprising:
after reading the system broadcast information change indication for the at least one type of system broadcast information from the paging message,
determining whether obtaining of Other System Information (OSI) is needed when the system broadcast information change indication corresponds to an other-system broadcast information change indication for the OSI, and not re-acquiring system broadcast information in response to determining that the OSI does not need to be obtained,; and
re-acquiring system broadcast information when the system broadcast information change indication corresponds to a master-system broadcast information change indication for a Master Information Block (MIB) and Remaining Minimum System Information (RMSI).

12. A network device, comprising:
a first processing unit, configured to, when a change takes place in system broadcast information, set, in a paging message, a system broadcast information change indication for at least one type of system broadcast information based on the system broadcast information in which the change takes place.

13. The network device of claim 12, wherein the system broadcast information change indication comprises at least one of:
a master-system broadcast information change indication for a Master Information Block (MIB) and Remaining Minimum System Information (RMSI); or,
an other-system broadcast information change indication for Other System Information (OSI).

14. The network device of claim 12, wherein the system broadcast information change indication comprises:
a change indication of system broadcast information corresponding to at least one System Information Block (SIB) group.

15. The network device of claim 14, further comprising:
a first communication unit, configured to configure SIB grouping configuration information through system broadcast.

16. The network device of claim 14, wherein a first processing unit is further configured to:
configure, in the paging message, a respective system broadcast information change indication for each type of system broadcast information.

17. A terminal device, comprising:
a second communication unit, configured to receive a paging message from a network side; and
a second processing unit, configured to read a system broadcast information change indication for at least one type of system broadcast information from the paging message.

18. The terminal device of claim 17, wherein the second processing unit is further configured to:
re-acquire, through the second communication unit, the system broadcast information when system broadcast information indicated by the system broadcast information change indication is to be updated to the terminal device.

19. The terminal device of claim 18, wherein the system broadcast information change indication comprises at least one of:
a master-system broadcast information change indication for a Master Information Block (MIB) and Remaining Minimum System Information (RMSI); or,
an other-system broadcast information change indication for Other System Information (OSI).

20. The terminal device of claim 18, wherein the system broadcast information change indication comprises:
a change indication of system broadcast information corresponding to at least one System Information Block (SIB) group.

21. The terminal device of claim 20, wherein the second communication unit is further configured to obtain SIB grouping configuration information through system broadcast.

22. The terminal device of claim 17, wherein the second processing unit is further configured to:
determine whether obtaining of Other System Information (OSI) is needed when the system broadcast information change indication corresponds to an other-system broadcast information change indication for the OSI,
not re-acquire system broadcast information in response to determining that the OSI does not need to be obtained; and
re-acquire system broadcast information when the system broadcast information change indication corresponds to a master-system broadcast information change indication for a Master Information Block (MIB) and Remaining Minimum System Information (RMSI).

23. A network device, comprising:
a processor; and
a memory storing a computer program executable by the processor,
wherein the processor is configured to execute the computer program to perform the method of any one of claims 1 to 5.

24. A terminal device, comprising:
a processor; and
a memory storing a computer program executable by the processor,
wherein the processor is configured to execute the computer program to perform the method of any one of claims 6 to 11.

25. A computer storage medium having stored therein computer executable instructions that, when executed by a processor, cause the processor to perform the method of any one of claims 1 to 11.
